# EUROPÄISCHE PATENTSCHRIFT

(11) **EP 0 752 567 B1**
(45) Veröffentlichungstag und Bekanntmachung des Hinweises auf die Patenterteilung: **26.08.1998**
(21) Anmeldenummer: 96810196.4
(22) Anmeldetag: 28.03.1996
(51) Int. Cl.: F26B 21/14, F26B 7/00

(54) **Verfahren zur Trocknung der Feststoffisolationen eines elektrischen Gerätes und Vorrichtung zur Durchführung dieses Verfahrens**
Process for drying the solid insulation of an electrical device, and apparatus for carrying out this process
Procédé de séchage d'une isolation solide d'un appareil électrique, et dispositif pour la mise en oeuvre de ce procédé

(30) Priorität: 04.07.1995 EP 95810440
(43) Veröffentlichungstag der Anmeldung: 08.01.1997
(73) Patentinhaber: MICAFIL Vakuumtechnik AG, CH-8048 Zürich (CH)
(72) Erfinder: Gmeiner, Paul, 8966 Lieli (CH)
(74) Vertreter: Kaiser, Helmut, Dr.

(56) Entgegenhaltungen:
- DE-A- 2 552 746
- DE-A- 2 756 298
- DE-C- 3 038 493
- GB-A- 1 572 751
- P.K.GMEINER: "Modern vapour drying processes and plants" Februar 1992 , MICAFIL VAKUUMTECHNIK AG , ZÜRICH XP002016470 * das ganze Dokument *

## Beschreibung

### TECHNISCHES GEBIET

Bei der Erfindung wird ausgegangen von einem Verfahren zur Trocknung der Feststoffisolationen mindestens eines elektrischen Gerätes nach der Vapour-Phase-Methode. Die Erfindung betrifft zugleich auch Vorrichtungen zur Durchführung dieses Verfahrens.

Bei Verfahren zur Trocknung der Feststoffisolationen eines elektrischen Gerätes, wie insbesondere eines Leistungstransformatoren, nach der Vapour-Phase-Methode wird die Kondensationswärme eines in einem Verdampfer erzeugten Solventdampfs zum raschen und schonenden Aufheizen der Feststoffisolationen des in einem auf Unterdruck gehaltenen Autoklaven befindlichen elektrischen Gerätes ausgenutzt. Beim Aufheizen aus den Feststoffisolationen tretende Substanzen, wie insbesondere Wasser, gegebenenfalls Isolieröl und/oder Verunreinigungen, werden in einem Solvent-Substanz-Dampfgemisch einer Kondensations- und Trennvorrichtung zugeführt, in der das Wasser aus dem Solvent abgeschieden wird. Gegebenenfalls vorhandenes Isolieröl und/oder Verunreinigungen werden durch Destillation aus dem Solvent entfernt. Bei der Ausführung des Vapour-Phase-Verfahrens fallen folgende Prozess-Schritte an:
- Beladen des Autoklaven mit dem Gerät, Evakuieren des beladenen Autoklaven und weitere vorbereitende Tätigkeiten,
- Aufheizen des beladenen Autoklaven mit dem kondensierenden Solventdampf und gegebenenfalls zusätzlich durch Einschalten der Autoklavenheizung, um den überwiegenden Teil der Substanzen aus den Feststoffisolationen des Gerätes zu entfernen,
- gegebenenfalls Durchführen von Zwischendrucksenkungen im Autoklaven, um während des Aufheizens ausgewaschenes Isolieröl abzudestillieren, und um in besonders schneller und schonender Weise die Substanzen zu entfernen,
- Absenken des Autoklavendrucks nach der Aufheizphase, um das Solvent durch Rückverdampfung aus den Feststoffisolationen des Gerätes zu entfernen,
- Anlegen von Feinvakuum bei eingeschalteter Autoklaven_ heizung an den Autoklaven, um Restsubstanzen aus den Feststoffisolationen zu entfernen, und
- Belüften und Entladen des Autoklaven.

Bei der Ausführung des Vapour-Phase-Verfahrens dringt das Solvent während des - je nach Grösse des Gerätes bis zu 40h betragenden - Aufheizens in die Feststoffisolationen ein und wird dort vorübergehend gebunden. Daher benötigt das Vapour-Phase-Verfahren zumindest soviel Solvent, wie von den Feststoffisolationen vorübergehend aufgenommen werden kann.

### STAND DER TECHNIK

Verfahren der eingangs genannten Art wurden von P.K.Gmeiner in der Firmenschrift der Fa. Micafil Vakuumtechnik AG, Zürich, MTV/E 02923000/22 "Modern vapour drying processes and plants" beschrieben. Die zur Ausführung der beschriebene Verfahren eingesetzten Vorrichtungen arbeiten mit Verdampfern, die entweder mit einer erheblich grösseren Menge an Solvent betrieben werden müssen als für den eigentlichen Prozess notwendig ist oder die einer besonders empfindlichen Regelung bedürfen und daher relativ aufwendig sind.

### KURZE DARSTELLUNG DER ERFINDUNG

Der Erfindung, wie sie in den Patentansprüchen angegeben ist, liegt die Aufgabe zugrunde, das Verfahren der eingangs genannten Art derart weiterzubilden, dass es in einfacher und wirtschaftlicher Weise ausgeführt werden kann, und zugleich Vorrichtungen anzugeben, deren Einsatz für eine rasche und energiesparende Durchführung dieses Verfahrens besonders vorteilhaft sind.

Das erfindungsgemässe Verfahren zeichnet sich dadurch aus, dass es in einfachen und leicht zu steuernden Verfahrensschritten ausgeführt werden kann und dennoch einen hohen Wirkungsgrad aufweist.

Dies ist zum einen dadurch bedingt, dass im Verdampfer zu Beginn des Verfahrens lediglich die für den eigentlichen Vapour-Phase-Prozess erforderliche Menge an Solvent vorgesehen sein muss. Daher entfällt das Aufheizen einer grösseren Menge an Solvent und ist zudem kein Hin- und Herpumpen von Solvent zwischen einem Solvent-Vorratstank und einer das Verfahren durchführenden Vorrichtung erforderlich. Wärmeverluste durch Abkühlen von Solvent beim Zurückführen in den Vorratstank werden so bei reduziertem Sicherheitsrisiko und erhöhter Redundanz vermieden.

Zum anderen ist der hohe Wirkungsgrad des Verfahrens auch dadurch bedingt, dass der Verdampfer je nach Menge des für den Vapour-Phase-Prozess benötigten Solvents zunächst als Blasenverdampfer - zumindest aber überwiegend als Blasenverdampfer - arbeitet und so in besonders effizienter Weise Solventdampf erzeugt. Erst wenn ein bestimmter Teil - bei einem zur Gänze gefüllten Verdampfer beispielsweise ein Viertel oder die Hälfte - des anfangs in Verdampfer gespeicherten Solvents aus dem Verdampfer entfernt und überwiegend in den Feststoffisolation gebunden ist, wirkt der Verdampfer in seinem oberen Teil als Dünnfilmverdampfer während sein unterer Teil weiterhin als Blasenverdampfer betrieben wird. Hierdurch wird erreicht, dass der Verdampfer bei sich verringerndem Solventinhalt stets die volle Leistung abgibt.

Besonders vorteilhaft kann mit dem erfindungsgemässen Verfahren die bei einer Zwischendrucksenkung gegebenenfalls vorgesehene Abdestillation von Isolieröl durchgeführt werden. Beim Aufheizen der Feststoffisolationen in den Verdampfer geführtes Isolieröl kann während der Zwischendrucksenkung durch Abdestillation des Solvents äusserst rasch und mit einem sehr geringen Restsolventgehalt gewonnen werden. Dies ist dadurch bedingt, dass der zunächst überwiegend als Blasen- oder als kombinierter Blasen- und Dünnfilmverdampfer betriebene Verdampfer ein schnelles Verdampfen des überwiegenden Teils des Solvents ermöglicht, und dass gegen Ende des Destillationsvorgangs der Verdampfer als Dünnfilmverdampfer betrieben wird und dann eine besonders gutes Abdestillieren des Solvents ermöglicht. Zugleich kann die für den Destillationsvorgang aufgewendete Energie grösstenteils zum weiteren Aufheizen der Feststoffisolationen ausgenutzt werden. Gegen Ende des Destillationsvorgangs, wenn der Solventgehalt im Verdampfer schon sehr gering ist und das Solvent dementsprechend wenig Energie auf die Feststoffisolationen überträgt, kann das Solvent durch Kurzschliessen des Autoklaven in besonders zeitsparender Weise aus der Anlage entfernt werden. Da Destillation und Aufheizen parallel erfolgen, wird gegenüber Verfahren, bei denen unabhängig von Aufheizen destilliert wird, Zeit eingespart.

Die zur Durchführung des erfindungsgemässen Verfahrens vorgesehenen Vorrichtungen zeichen sich dadurch aus, dass der in dieser Vorrichtung vorgesehene Verdampfer gegenüber den üblicherweise verwendeten Verdampfern ein geringes Volumen aufweist. Zudem können die während des Betriebs des Verdampfers freigelegten Heizelemente bei relativ niedrigen Temperaturen gefahren werden, da infolge Dünnfilmverdampfung eine kleinere Temperaturdifferenz zwischen Heizelement und Solvent erforderlich ist als bei Blasenverdampfung. Ferner können die Vorrichtungen einfacher und platzsparender ausgebildet werden, da ein in der zur Durchführung des erfindungsgemässen Verfahrens vorgesehenen Kondensations- und Trennvorrichtung vorhandener Kondensator gleichzeitig als Kondensator für eine Pumpe eines Vakuumsystems der Vorrichtung verwendet werden kann.

Mit einer lediglich einen Verdampfer, aber zwei Autoklaven und zwei Kondensatoren aufweisenden Vorrichtung zur Durchführung des erfindungsgemässen Verfahrens wird der Verdampfer besonders gut ausgenutzt, da dann nämlich ein grosser Teil zweier nebeneinander ablaufender Vapour-Phase-Prozesse parallelgefahren werden kann.

### KURZE BESCHREIBUNG DER ZEICHNUNGEN

In den Zeichnungen sind Ausführungsbeispiele der Erfindung vereinfacht dargestellt, und zwar zeigt:
- Fig.1: ein Prinzipschaltbild einer Vorrichtung zur Durchführung des erfindungsgemässen Verfahrens,
- Fig.2: eine Aufsicht auf einen Schnitt durch eine erste Ausführungsform eines in der Vorrichtung gemäss Fig.1 vorgesehenen Verdampfers während des Betriebs als Blasenverdampfer,
- Fig.3: eine Aufsicht auf den Schnitt durch den Verdampfer gemäss Fig.2 während des Betriebs als Dünnfilmverdampfer und eine Ausschnittsvergrösserung dieser Aufsicht,
- Fig.4: eine Aufsicht auf einen Schnitt durch eine zweite Ausführungsform eines in der Vorrichtung gemäss Fig.1 vorgesehenen Verdampfers während des Betriebs als Dünnfilmverdampfer und eine Ausschnittsvergrösserung dieser Aufsicht, und
- Fig.5: ein Prinzipschaltbild einer weiteren Vorrichtung zur Durchführung des erfindungsgemässen Verfahrens.

### WEGE ZUR AUSFÜHRUNG DER ERFINDUNG

In allen Figuren bezeichnen gleiche Bezugszeichen auch gleichwirkende Teile. Bei dem in Fig.l dargestellten Prinzipschaltbild einer Vapour-Phase-Anlage zur Durchführung des erfindungsgemässen Verfahrens bezeichnet 1 einen Verdampfer, der über ein Dampfvorlaufventil 2 mit einem heiz- und evakuierbaren Autoklaven 3 verbindbar ist. Der Autoklav 3 ist mit einem Leistungstransformator 4 beladen und weist einen auf ein steuerbares Dampfrücklaufventil 5 wirkenden Drucksensor 6 auf. Der Autoklav 3 ist einerseits über das Dampfrücklaufventil 5 mit einem Kondensator 7 einer Kondensations- und Trennvorrichtung 8 verbindbar und kann andererseits über ein Absperrventil 9 und ein Filter 10 mit dem Eingang einer Solventpumpe 11 verbunden werden. Der Ausgang der Solventpumpe 11 ist über ein Durchgangventil 12 und ein Filter 13 mit einem Solvent-Verteilsystem 14 des Verdampfers 1 verbindbar und wirkt auf ein Absperrventil 15, welches dem Ablassen etwa von Isolieröl dient.

Der Kondensator 7 hat zwei Ausgänge, von denen einer mit dem Eingang einer vorzugsweise als Rootspumpe 16 ausgebildeten Vakuumpumpe eines Vakuumsystems 17 verbunden ist und ein das im Kondensator 7 abgeschiedene Kondensat weiterführender weiterer Ausgang auf einen Eingang eines Trennbehälters 18 wirkt, welcher der Abscheidung von Wasser aus dem überwiegend solventhaltigen Kondensat dient.

Der Ausgang der Rootspumpe 16 wirkt über einen nicht bezeichneten Kondensator und zwei parallelgeschaltete ebenfalls nicht bezeichnete Durchgangventile auf die Eingänge zweier gegen Atmosphäre arbeitenden Vakuumpumpen 19 und 20, von denen die Pumpe 20 der Entfernung von Leckluft dient.

Der Trennbehälter 18 weist zwei Ausgänge auf, von denen der eine auf ein der Entnahme von Wasser dienendes Absperrventil 21 wirkt und der andere mit dem Eingang einer Solventpumpe 22 verbunden ist, deren Ausgang wahlweise über ein Durchgangventil 23, das Durchgangventil 12 und das Filter 13 mit dem Solvent-Verteilsystem 14 des Verdampfers 1 oder über ein Durchgangventil 24 mit einem Solvent-Vorratsbehälter 25 verbindbar ist.

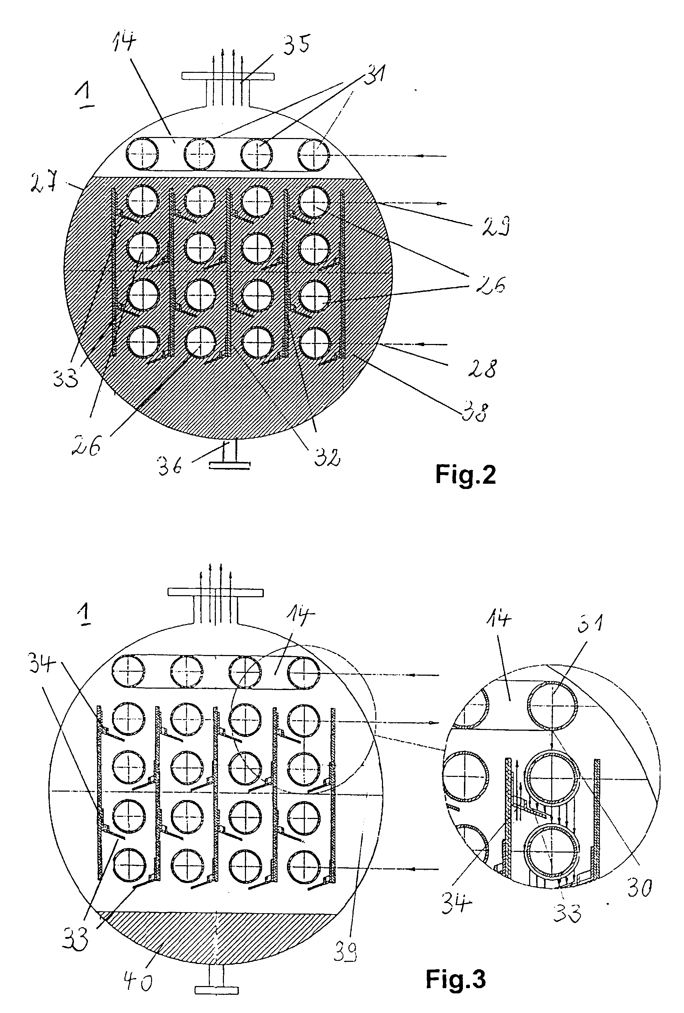

Der Aufbau des Verdampfers 1 ist aus den Figuren 2 und 3 ersichtlich. Der Verdampfer 1 weist einen evakuierbaren Behälter 27 auf, in dem Heizelemente 26 und das Solvent-Verteilsystem 14 angeordnet sind. Die Heizelemente 26 sind jeweils rohrförmig ausgebildet, wobei die Rohrachsen überwiegend in horizontaler Richtung ausgerichtet sind und die einzelnen Rohre horizontal und vertikal voneinander beabstandet im Behälter 27 angeordnet sind. In die einzelnen Rohre wird über einen Einlass 28 flüssiges oder gasförmiges Heizmedium zugeführt. Nach Abgabe von Wärme wird das Heizmedium über einen Auslass 29 aus den Rohren entfernt. Das - wie durch einen Pfeil angedeutet ist - mit flüssigem Solvent versorgte Solvent-Verteilsystem 14 ist vertikal über den Heizelementen 26 angebracht und weist der Verteilung des zugeführten Solvents dienende, überwiegend horizontal ausgerichtete und mit Austrittsöffnungen 30 (Vergrösserung in Fig.3) für das flüssige Solvent versehene Kanäle 31 auf. Die Austrittsöffnungen 30 sind in Längsrichtung der Kanäle 31 gleichmässig verteilt im Boden der Kanäle derart angeordnet, dass das austretende flüssige Solvent überwiegend den unmittelbar unter dem Solvent-Verteilsystem 14 liegenden Heizelementen 26 zugeführt wird.

Zwischen den Heizelementen 26 sind vertikal ausgerichtete Leitbleche 32 angeordnet. An den Leitbleche 32 sind jeweils abwärts geneigte und über einem darunterliegenden Heizelement 26 angeordnete Schikanen 33 angebracht. Die Schikanen 33 weisen im Bereich des zugeordneten Leitblechs 32 jeweils einen überwiegend vertikal geführten Kanal 34 auf.

Eine am Kopf des Behälters 27 vorgesehene Öffnung 35 ist über das Dampfvorlaufventil 2 mit dem Autoklaven 3 verbindbar und dient der Entfernung von Solventdampf aus dem Verdampfer 1. Eine am Boden des Behälters 27 vorgesehenen Öffnung 36 ist über ein Absperrventil 37 (Fig.l) und das Filter 10 mit dem Eingang der Solventpumpe 11 verbindbar.

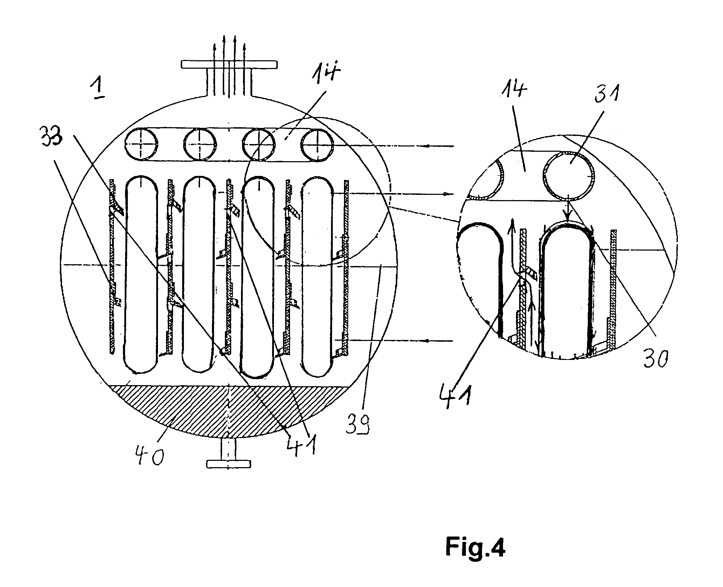

Eine weitere Ausführungsform des Verdampfers ist in Fig.4 dargestellt. Bei dieser Ausführungsform werden die Heizelemente 26 von überwiegend in vertikaler Richtung ausgerichteten flachen Registern gebildet. Diese Register erstrecken sich in horizontaler Richtung voneinander beabstandet senkrecht zur Zeichenebene im Behälter 27. Mit dem Bezugszeichen 41 sind im Leitblech 32 unterhalb der Schikanen 33 angeordnete Durchtrittsöffnungen 41 bezeichnet, welche alternativ anstelle der in den Schikanen 33 vorgesehenen Känale verwendet werden können.

Die Wirkungsweise dieser Vorrichtung ist wie folgt:
Der Leistungstransformator 4 wird in den Autoklaven 3 geladen und soviel Solvent 38 in den Verdampfer 1 eingefüllt wie für die Durchführung des Vapour-Phase-Prozesses benötigt wird. Als Solvent wird typischerweise ein Leichtöl, wie es etwa von der Fa. Shell unter der Bezeichnung Shell Sol-H vertrieben wird, verwendet mit einem Dampfdruck, welcher tiefer ist als der Dampfdruck von Wasser aber höher als der Dampfdruck von gegebenenfalls in den Feststoffisolationen vorhandenem Isolieröl. Weist der Leistungstransformator 4 eine grosse Menge an Feststoffisolationen auf, wird soviel Solvent eingefüllt bis entsprechend Fig.2 die Heizelemente 26 ins Solvent eingetaucht sind. Für ein kleineres Gerät wird weniger Solvent benötigt, so dass gegebenenfalls die oberen Heizelemente 26, zumindest aber die oberen Bereiche der oberen Heizelemente 26 freiliegen. Durch das Vakuumsystem 17 werden der Verdampfer 1, der Autoklav 3 und die Kondensations- und Trennvorrichtung 8 evakuiert.

Nachdem diese Vorbereitungsphase abgeschlossen ist, wird die Vakuumpumpe 19 des Vakuumsystems 17 ab- und die wesentlich kleinere und lediglich dem Entfernen von nicht kondensierenden Restgasen und Leckluft dienende Leckpumpe 20 zugeschaltet.

In der nun folgenden Aufheizphase werden der Leistungstransformator 4 und damit auch seine Feststoffisolationen durch Einschalten der Heizung des Autoklaven 3 und durch kondensierenden, vom Verdampfer 1 erzeugten Solventdampf aufgeheizt. Das kondensierte Solvent dringt in die Feststoffisolationen des Leistungstransformators ein und setzt in den Isolationen gegebenenfalls vorhandenes Isolieröl frei. Bedingt durch die steigende Temperatur der Feststoffisolationen dampft zugleich Wasser von den Feststoffisolationen ab. Ein Solvent und Wasser enthaltendes Dampfgemisch wird in den Kondensator 7 geführt und dort verflüssigt.

Das im Kondensator 7 abgeschiedene Kondensat wird in den Trennbehälter 18 geführt und in Solvent und in Wasser getrennt. Das Wasser kann über das Absperrventil 21 aus dem Trennbehälter 18 entfernt werden, während das Solvent mittels der Solventpumpe 22 zum Solvent-Verteilsystem 14 befördert wird. Sich am Boden des Autoklaven 3 sammelndes Solvent, welches gegebenenfalls mit Isolieröl gemischt ist, wird bei geöffnetem Absperrventil 9 über die Solventpumpe 11 ebenfalls zum Solvent-Verteilsystem 14 befördert.

Die Aufheizung der Feststoffisolationen kann verhältnismässig schnell erfolgen, da der Verdampfer 1 zunächst als Blasenverdampfer arbeitet. Ist eine bestimmte Menge an Solvent 38 aus dem Verdampfer 1 entwichen und ist dann von den Feststoffisolationen des Leistungstransformators 4 aufgenommen worden, so liegt ein Teil der anfangs im Solvent 38 eingebetteten Heizelemente des Verdampfers 1 - etwa oberhalb einer in den Figuren 3 und 4 mit dem Bezugszeichen 39 markierten Solventoberfläche - frei (Fig.3) oder zumindest teilweise frei (Fig.4). Auf diese freigelegten Heizelemente wird das von den Solventpumpen 11, 22 zum Solvent-Verteilsystem 14 beförderte Solvent verteilt.

Wie aus der Vergrösserung von Fig.3 ersichtlich ist, strömt das in den Kanälen 31 geführte Solvent aus den Öffnungen 30 auf die nach oben weisenden Oberflächen der unmittelbar unter dem Solvent-Verteilsystem 14 angeordneten rohrförmig ausgebildeten Heizelemente 26. Unter der Wirkung der Schwerkraft umströmt das Solvent unter Bildung einer dünnen Solventschicht diese Heizelemente. Ein Teil der Solventschicht wird verdampft, während der verbleibende Teil einerseits direkt und andererseits über die Schikanen 33 auf das nach unten nachfolgende Heizelement geführt wird. Bei dieser Dünnfilmverdampfung gebildeter Solventdampf wird im Gegenstrom zum nach unten strömenden flüssigen Solvent durch die Kanäle 34 nach oben geführt.

Anstelle der Kanäle 34 können auch die aus Fig.4 ersichtlichen Durchtrittsöffnungen 41 verwendet werden. Auch in diesem Fall wird der Solventdampf im Gegenstrom zum nach unten strömenden flüssigen Solvent nach oben geführt.

Eine besonders wirtschaftliche Dünnfilmverdampfung wird erreicht, wenn die Schikanen 33 - wie aus den Figuren 2 und 3 ersichtlich ist - gegeneinander höhenversetzt auf zwei einander gegenüberstehenden Wänden zweier benachbarter Leitbleche 32 angeordnet sind.

Vom Verteilsystem 14 wird zumindest soviel flüssiges Solvent abgegeben, dass die auf eine vorbestimmte Temperatur aufgeheizten, freiliegenden Heizelemente ständig mit einer Solventschicht bedeckt sind.

Nach dem Abdampfen des die Heizelemente 26 bedeckenden Solvents wird der zuvor als kombinierter Blasen- und Dünnfilmverdampfer wirkende Verdampfer 1 ausschliesslich als Dünnfilmverdampfer betrieben.

Der Verdampfer arbeitet besonders wirtschaftlich, da er nur eine geringe Solventmenge aufnehmen muss. Darüber hinaus arbeitet er auch besonders schonend, da bei der Dünnfilmverdampfung zwischen Heizmedium und Solvent lediglich eine kleine Temperaturdifferenz auftritt.

Die Menge des an die Feststoffisolationen geführten Solventdampfs wird hierbei so optimiert, dass bei möglichst hohem Dampfdurchsatz der Dampf im Autoklaven 1 kondensieren und hierbei freigesetzte Kondenswärme vollständig an den Leistungstransformator 4 bzw. die Feststoffisolationen abgeben kann.

Das Dampfrücklaufventil 5 ist regelbar ausgebildet. Die Menge des von den Feststoffisolationen weggeführten Solvent-Wasser-Dampfgemisches wird geregelt in Abhängigkeit von dem im Autoklaven 1 herrschenden Dampfdruck und der Masse der Feststoffisolationen. Als Regelgrössen werden hierbei der Wert des vom Drucksensor 6 im Autoklaven 1 ermittelten Dampfdrucks sowie ein vor der Durchführung der Verfahrens ermittelter und von der Masse der Feststoffisolationen abhängiger Faktor eingegeben.

Um ein besonders schnelles und schonendes Entfernen von Wasser und gegebenenfalls vorhandenem Isolieröl und/oder anderen störenden Substanzen zu ermöglichen, wird während des Aufheizens der Druck im Autoklaven 3 abgesenkt. Eine solche Zwischendrucksenkung wird durch Drosselung der Dampfzufuhr erreicht, wobei im allgemeinen das Dampfvorlaufventil 2 geschlossen wird. Bei einer solchen Zwischendrucksenkung wird das Solvent-Wasser-Dampfgemisch aus dem Autoklaven in die Kondensations- und Trennvorrichtung 8 gebracht und in Wasser und Solvent getrennt. Das so gewonnene, wasserfreie Solvent wird in den Verdampfer 1 zurückgepumpt.

Eine Zwischendrucksenkung kann auch zur Abdestillation des Solvents von gegebenenfalls in den Feststoffisolationen vorhandenem, beim Aufheizen aus den Feststoffisolationen gewaschenem und in den Verdampfer 1 geführtem Isolieröl benutzt werden. Bei dieser Zwischendrucksenkung wird zunächst bei geschlossenem Dampfvorlaufventil 2 das gesamte Solvent der Anlage in den Verdampfer 1 gebracht. Sodann wird das Dampfvorlaufventil 2 geöffnet und wird das abgedampfte Solvent über den Autoklaven 3 und das geöffnete Dampfrücklaufventil 5 in die Kondensations- und Trennvorrichtung 8 geführt und wird von dort mit Hilfe der Solventpumpe 22 bei geschlossenem Durchgangventil 23 schliesslich als Flüssigkeit über das geöffnete Durchgangventil 24 in den Solvent-Vorratsbehälter 25 gepumpt.

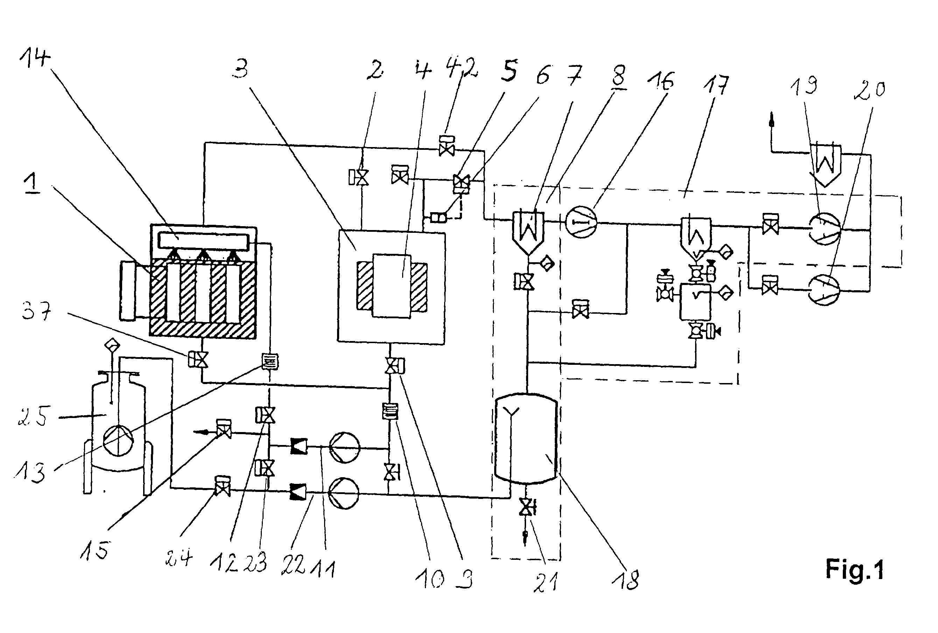

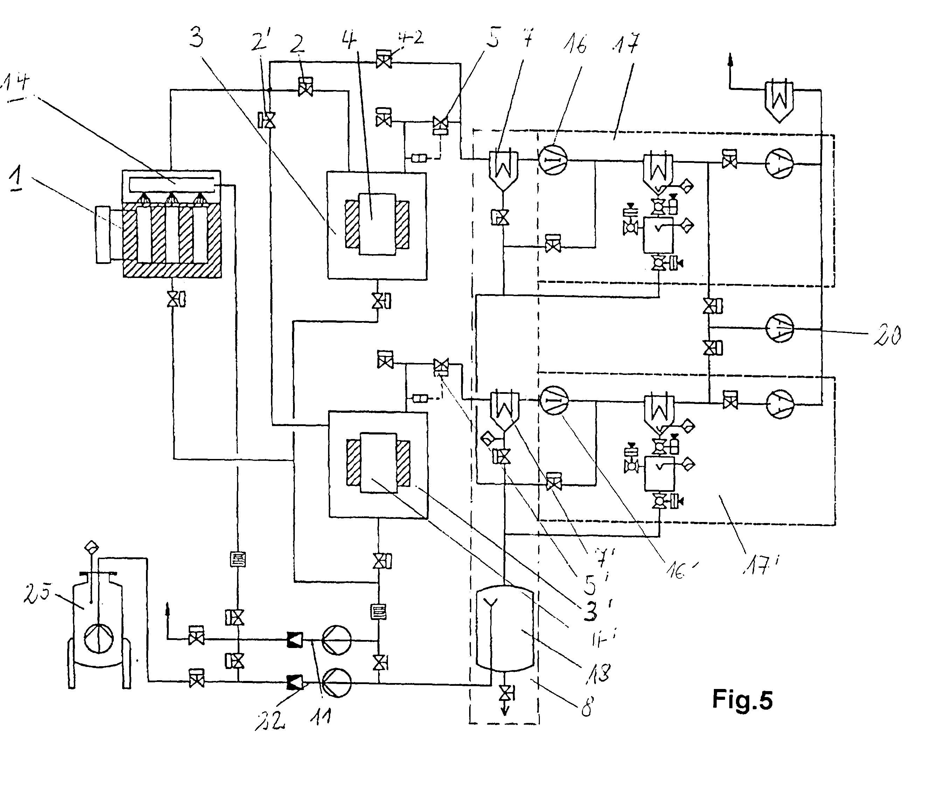

Da der Solventdampf den im Autoklaven 3 befindlichen Leistungstransformator 4 aufheizt, wird die für den Destillationsvorgang aufgewendete Energie grösstenteils zum weiteren Aufheizen der Feststoffisolationen ausgenutzt. Gegen Ende des Destillationsvorgangs, wenn der Solventgehalt im Verdampfer gering ist und das Solvent dementsprechend wenig Energie auf die Feststoffisolationen überträgt, kann das verbliebene Solvent durch Kurzschliessen des Autoklaven mit Hilfe eines aus den Figuren 1 und 5 ersichtlichen By-Pass-Ventils 42 besonders rasch aus der Anlage verdampft werden. Da während der Destillation die Feststoffisolationen weiter aufgeheizt werden, verlängert das Destillieren die Aufheizphase nicht. Da die Destillation parallel mit dem Aufheizen durchgeführt werden kann, wird jedoch gegenüber Verfahren, bei denen nicht parallel destilliert werden kann, die bis zu 4h betragende Destillationszeit eingespart.

Während des Abdampfens des Solvents wird gleichzeitig das im Verdampfer 1 vorhandene Solvent-Isolieröl-Gemisch zirkuliert. Bei dieser Zirkulation wird das Solvent-Isolieröl-Gemisch über das geöffnete Absperrventil 37 und das Filter 10 an den Eingang der Solventpumpe 11 geführt und von dort über das geöffnete Durchgangsventil 12 und das Filter 13 zum Solvent-Verteilsystem 14 gepumpt, von wo aus es wieder in den Verdampfer 1 gelangt und erneut destilliert wird.

Das Solvent weist wegen der Destillation überwiegend mit einem Dünnfilmverdampfer einen besonders hohen Reinheitsgrad auf. Im Verdampfer 1 bleibt dann das in Fig.3 mit dem Bezugszeichen 40 markierte Isolieröl zurück, welches nach Öffnen der Ventile 37 und 15 mit der Solventpumpe 11 aus dem Behälter 27 gepumpt werden kann.

Der Verdampfer wird danach wieder mit Solvent aus dem Solvent-Vorratsbehälter 25 beladen und es kann nun weiter mit Solventdampf aufgeheizt werden unter Einbezug von Zwischendrucksenkungen bei geschlossenem Dampfvorlaufventil 2.

Nach Beendigung der Aufheizphase wird durch Schliessen des Dampfvorlaufventils 2 der Druck im Autoklaven 3 gesenkt und das Solvent endgültig aus dem Autoklaven 3 entfernt. In einer sich anschliessenden Phase wird bei eingeschalteter Autoklavenheizung über das Vakuumsystem 17 Feinvakuum an den Autoklaven 3 angelegt und werden so restliches Wasser und andere störende Substanzen aus den Feststoffisolationen entfernt. Nicht kondensierbare Restgase werden durch die Rootspumpe 16 und die nachgeschaltete Leckpumpe 20 kontinuierlich entfernt. Hierbei ist es von besonderem Vorteil, dass der Kondensator 7 - obwohl er ein Teil der Kondensations- und Trennvorrichtung 8 ist - zugleich als Kondensator für die Rootspumpe 16 wirkt, und dass ausserdem ein bei Vorrichtungen nach dem Stand der Technik zwischen Autoklav 3 und Rootspumpe 16 geschaltetes Ventil sowie ein Kondensator entfallen.

Nach Beendigung der Feinvakuumphase wird der Autoklav belüftet und der nun getrocknete, ölfreie Feststoffisolationen aufweisende Leistungstransformator 4 dem Autoklaven 1 entnommen.

Bei der in Fig.5 dargestellten Ausführungsform der Vorrichtung zur Durchführung des erfindungsgemässen Verfahrens ist der Verdampfer über ein zweites Dampfvorlaufventil 2' mit einem Feststoffisolationen eines zweiten elektrischen Gerätes 4' aufnehmenden zweiten Autoklaven 3' verbindbar. Der zweite Autoklav 3' ist über ein zweites Dampfrücklaufventil 5' mit einem einer Rootspumpe 16' eines zweiten Vakuumsystems 17' vorgeschalteten zweiten Kondensator 7' der Kondensations- und Trennvorrichtung 8 verbindbar. Der Kondensator 7' weist einen verflüssigtes Solvent abführenden Ausgang auf, welcher mit dem Trennbehälter 18 der Kondensations- und Trennvorrichtung 8 verbindbar ist. Bei dieser Vorrichtung wird der Verdampfer 1 besonders gut ausgenutzt, da ein grosser Teil zweier nebeneinander ablaufender Vapour-Phase-Prozesse parallelgefahren werden kann. So kann der Autoklav 3 aufgeheizt werden, während der Autoklav 3' zwischenzeitlich durch Beladen und Evakuieren vorbereitet wird. Sobald beim Autoklaven 3 durch Schliessen des Dampfvorlaufventils 2 die Aufheizphase beendet wird, wird das Dampfvorlaufventil 2' geöffnet und mit dem Aufheizen des Autoklaven 3' begonnen.

### Bezugszeichnungsliste

- 1: Verdampfer
- 2, 2': Dampfvorlaufventile
- 3, 3': Autoklaven
- 4, 4': Leistungstransformatoren
- 5, 5': Dampfrücklaufventile
- 6: Drucksensor
- 7, 7': Kondensatoren
- 8: Kondensations- und Trennvorrichtung
- 9: Durchgangventil
- 10: Filter
- 11: Solventpumpe
- 12: Durchgangventil
- 13: Filter
- 14: Solvent-Verteilsystem
- 15: Absperrventil
- 16, 16': Rootspumpen
- 17, 17': Vakuumsysteme
- 18: Trennbehälter
- 19, 20: Vakuumpumpen
- 21: Absperrventil
- 22: Solventpumpe
- 23, 24: Durchgangventil
- 25: Solvent-Vorratsbehälter
- 26: Heizelemente
- 27: Behälter
- 28: Einlass
- 29: Auslass
- 30: Austrittsöffnungen
- 31: Kanäle
- 32: Leitbleche
- 33: Schikanen
- 34: Kanäle
- 35, 36: Öffnungen
- 37: Absperrventil
- 38: Solvent
- 39: Solventoberfläche
- 40: Isolieröl
- 41: Durchtrittsöffnung
- 42: By-Pass-Ventil

## Patentansprüche

1. Verfahren zur Trocknung der Feststoffisolationen eines ersten elektrischen Gerätes (4) nach der Vapour-Phase-Methode, bei dem die zumindest Wasser, gegebenenfalls zusätzlich Öl sowie Verunreinigungen, enthaltenden Feststoffisolationen bei Unterdruck durch Zufuhr von Solventdampf aus einem Heizelemente (26) enthaltenden Verdampfer (1) aufgeheizt werden und hierbei ein zumindest Solvent und Wasser enthaltendes Dampfgemisch gebildet wird, und bei dem der gebildete Dampf nachfolgend in einer Vorrichtung (8) kondensiert und zumindest Wasser aus dem Solvent abgeschieden wird, dadurch gekennzeichnet, dass zu Beginn des Aufheizvorgangs der zumindest teilweise mit Solvent beladene und vollständig oder zumindest teilweise in Solvent eingebettete Heizelemente (26) aufweisende Verdampfer (1) überwiegend als Blasenverdampfer betrieben wird,
dass spätestens nach dem Verdampfen eines Teils der anfangs im Verdampfer vorhandenen Solventmenge in der Kondensations- und Trennvorrichtung (8) gewonnenes flüssiges Solvent einem Solvent-Verteilsystem (14) des Verdampfers (1) zugeführt wird, und
dass das zugeführte flüssige Solvent vom Verteilsystem (14) abgegeben und zwecks Dünnfilmverdampfung an Heizelemente (26) geleitet wird, die zu Beginn des Aufheizvorgangs zumindest teilweise freiliegen oder während des Aufheizens zumindest teilweise freigelegt werden.

2. Verfahren nach Anspruch 1, dadurch gekennzeichnet, dass vom Verteilsystem (14) zumindest soviel flüssiges Solvent abgegeben wird, dass die freiliegenden Teile der Heizelemente (26) ständig mit einer Solventschicht bedeckt sind.

3. Verfahren nach Anspruch 2, dadurch gekennzeichnet, dass aus der Solventschicht gebildeter Solventdampf im Gegenstrom zum flüssigen Solvent im Verdampfer (1) geführt wird.

4. Verfahren nach einem der Ansprüche 1 bis 3, dadurch gekennzeichnet, dass nach Abdampfen des die Heizelemente (26) bedeckenden Solvents der Verdampfer (1) ausschliesslich als Dünnfilmverdampfer betrieben wird.

5. Verfahren nach einem der Ansprüche 1 bis 4, bei dem neben Wasser zumindest Isolieröl (40) aus den Feststoffisolationen freigesetzt und mit dem Solvent in den Verdampfer (1) geführt wird, dadurch gekennzeichnet, dass bei einer während des Aufheizens vorgesehenen ersten Zwischendrucksenkung das Solvent unter Konzentration des Isolieröls (40) aus dem Verdampfer abgedampft und über die Kondensations- und Trennvorrichtung (8) in einen Solvent-Vorratsbehälter (25) geführt wird, dass das durch Abdampfen von Solvent gewonnene Isolieröl aus dem Verdampfer entfernt wird, und dass der Verdampfer wieder mit abgedampften Solvent beladen wird.

6. Verfahren nach Anspruch 5, dadurch gekennzeichnet, dass während des Abdampfens des Solvents ein Solvent-Isolieröl-Gemisch aus dem Verdampfer (26) entfernt und über das Solvent-Verteilsystem wieder in den Verdampfer (1) zurückgeführt wird.

7. Verfahren nach einem der Ansprüche 5 oder 6, dadurch gekennzeichnet, dass das abgedampfte Solvent unter Abgabe von Kondensationswärme zu den Feststoffisolationen geführt wird.

8. Verfahren nach Anspruch 7, dadurch gekennzeichnet, dass nach Abdampfen des überwiegenden Teils des Solvents das abgedampfte Solvent vom Verdampfer (1) direkt zur Kondensations- und Trennvorrichtung (8) geführt wird.

9. Verfahren nach einem der Ansprüche 5 bis 8, dadurch gekennzeichnet, dass bei einer während des Aufheizens vorgesehenen und der ersten nachfolgenden zweiten Zwischendrucksenkung das Solvent von den Feststoffisolationen über die Kondensations- und Trennvorrichtung (8) in den Verdampfer (1) geführt wird.

10. Verfahren nach einem der Ansprüche 1 bis 9, dadurch gekennzeichnet, dass die Menge des von den Feststoffisolationen weggeführten Solvent-Wasser-Dampfgemisches geregelt wird in Abhängigkeit von dem in einem die Feststoffisolationen aufnehmenden ersten Autoklaven (3) herrschenden Dampfdruck und der Masse der Feststoffisolationen.

11. Vorrichtung zur Durchführung des Verfahrens nach einem der Ansprüche 1 bis 10, bei der der Verdampfer (1) einen die Heizelemente (26) und das Solvent-Verteilsystem (14) aufnehmenden, evakuierbaren Behälter (27) aufweist, dadurch gekennzeichnet, dass die Heizelemente (26) von überwiegend in horizontaler Richtung ausgerichteten Rohren gebildet sind und in horizontaler und vertikaler Richtung voneinander beabstandet im Behälter (27) angeordnet sind, und dass das Solvent-Verteilsystem (14) über den Heizelementen (26) angebracht ist und der Verteilung des zugeführten Solvents dienende, überwiegend horizontal ausgerichtete und mit Austrittsöffnungen (30) für das flüssige Solvent versehene Kanäle (31) aufweist, welche Austrittsöffnungen (30) derart angeordnet sind, dass das austretende flüssige Solvent überwiegend den dem Solvent-Verteilsystem (14) benachbarten Heizelementen (26) zugeführt wird.

12. Vorrichtung zur Durchführung des Verfahrens nach einem der Ansprüche 1 bis 10, bei der der Verdampfer (1) einen die Heizelemente (26) und das Solvent-Verteilsystem (14) aufnehmenden, evakuierbaren Behälter (27) aufweist, dadurch gekennzeichnet, dass die Heizelemente (26) von überwiegend in vertikaler Richtung ausgerichteten flachen Registern gebildet werden und in horizontaler Richtung voneinander beabstandet im Behälter (27) angeordnet sind, und dass das Solvent-Verteilsystem (14) über den Heizelementen (26) angebracht ist und der Verteilung des zugeführten Solvents dienende, überwiegend horizontal ausgerichtete und mit Austrittsöffnungen (30) für das flüssige Solvent versehene Kanäle (31) aufweist, welche Austrittsöffnungen (30) derart angeordnet sind, dass das austretende flüssige Solvent überwiegend den dem Solvent-Verteilsystem (14) benachbarten Heizelementen (26) zugeführt wird.

13. Vorrichtung nach einem der Ansprüche 11 oder 12, dadurch gekennzeichnet, dass zwischen den Heizelemente (26) vertikal ausgerichtete Leitbleche (32) angeordnet sind.

14. Vorrichtung nach Anspruch 13, dadurch gekennzeichnet, dass an mindestens einem der Leitbleche (32) mindestens eine abwärts geneigte und über einem darunterliegenden Heizelement (26) angeordnete Schikane (33) angebracht ist.

15. Vorrichtung nach Anspruch 14, dadurch gekennzeichnet, dass die mindestens eine Schikane (33) im Bereich des Leitblechs (32) mindestens einen überwiegend vertikal geführten Kanal (34) aufweist oder dass im Leitblech (32) mindestens eine unterhalb der mindestens einen Schikane (33) angeordnete Durchtrittsöffnung (41) vorgesehen ist.

16. Vorrichtung zur Durchführung des Verfahrens nach einem der Ansprüche 1 bis 10 mit einem mit dem Verdampfer (1) über ein erstes Dampfvorlaufventil (2) verbindbaren und die Feststoffisolationen aufnehmenden ersten Autoklaven (3), mit einer über ein erstes Dampfrücklaufventil (5) mit dem ersten Autoklaven (3) verbindbaren Kondensations- und Trennvorrichtung (8), mit mindestens einer der Kondensations- und Trennvorrichtung (8) nachgeschalteten Solventpumpe (11, 22) und mit einem auf den Verdampfer (1), den ersten Autoklaven (3) und die Kondensations- und Trennvorrichtung (8) wirkenden ersten Vakuumsystem (17), dadurch gekennzeichnet, dass zwischen das erste Dampfrücklaufventil (5) und einer Vakuumpumpe (16) des ersten Vakuumsystems (17) ein erster Kondensator (7) der Kondensations- und Trennvorrichtung (8) geschaltet ist mit einem verflüssigtes Solvent abführenden Ausgang, welcher mit einem die Abscheidung des Wasser aus dem Solvent bewirkenden Trennbehälter (18) der Kondensations- und Trennvorrichtung (8) verbindbar ist.

17. Vorrichtung nach Anspruch 16, dadurch gekennzeichnet, dass das erste Dampfrücklaufventil (5) in Abhängigkeit vom im ersten Autoklaven (3) herrschenden Druck und der Masse der Feststoffisolationen regelbar ist.

18. Vorrichtung nach einem der Ansprüche 16 oder 17, dadurch gekennzeichnet, dass der Verdampfer (1) über ein zweites Dampfvorlaufventil (2') mit einem Feststoffisolationen eines zweiten elektrischen Gerätes (4') aufnehmenden zweiten Autoklaven (3') verbindbar ist, dass der zweite Autoklav (3') über ein zweites Dampfrücklaufventil (5') mit einem einer Vakuumpumpe (16') eines zweiten Vakuumsystems (17') vorgeschalteten zweiten Kondensator (7') der Kondensations- und Trennvorrichtung (8) verbindbar ist, wobei der zweite Kondensator (7') einen verflüssigtes Solvent abführenden Ausgang aufweist, welcher mit dem Trennbehälter (18) der Kondensations- und Trennvorrichtung (8) verbindbar ist.

## Claims

1. Method for drying the solid insulation of a first electrical device (4) using the vapour-phase method, in which the solid insulation (which contains at least water, and possibly additionally oil and impurities) is heated at reduced pressure by supplying solvent vapour from an evaporator (1) containing heating elements (26) and, in the process, a vapour mixture which contains at least solvent and water is formed, and in which the vapour which is formed is subsequently condensed in an apparatus (8) and at least water is separated from the solvent, characterized in that at the start of the heating process, the evaporator (1) (which is at least partially loaded with solvent and has heating elements (26) which are completely or at least partially immersed in solvent) is operated predominantly as a bubble evaporator, in that, at the latest after the evaporation of some of the solvent amount which is initially present in the evaporator, liquid solvent obtained in the condensation and separating apparatus (8) is supplied to a solvent distribution system (14) of the evaporator (1), and in that the liquid solvent supplied is emitted from the distribution system (14) and, for the purpose of thin-film evaporation, is passed to heating elements (26) which are at least partially exposed at the start of the heating process or are at least partially exposed during heating.

2. Method according to Claim 1, characterized in that the distribution system (14) emits at least enough liquid solvent for the exposed parts of the heating elements (26) to be continuously covered with a solvent layer.

3. Method according to Claim 2, characterized in that solvent vapour which is formed from the solvent layer is carried in the opposite flow direction to the liquid solvent in the evaporator (1).

4. Method according to one of Claims 1 to 3, characterized in that, after the solvent which covers the heating elements (26) has evaporated, the evaporator (1) is operated exclusively as a thin-film evaporator.

5. Method according to one of Claims 1 to 4, in which, in addition to water, at least insulating oil (40) is released from the solid insulation and is passed with the solvent into the evaporator (1), characterized in that, when a first intermediate pressure reduction, which is provided during the heating, occurs, the solvent is evaporated from the evaporator, with the insulating oil (40) being concentrated, and is passed into a solvent reservoir (25) via the condensation and separating apparatus (8), in that the insulating oil which is obtained by evaporation of solvent is removed from the evaporator, and in that the evaporator is loaded with evaporated solvent again.

6. Method according to Claim 5, characterized in that, during the evaporation of the solvent, a solvent/ insulating oil mixture is removed from the evaporator (26) and is fed back again via the solvent distribution system into the evaporator (1).

7. Method according to one of Claims 5 or 6, characterized in that the evaporated solvent is passed to the solid insulation with the latent heat of condensation being emitted.

8. Method according to Claim 7, characterized in that, after the majority of the solvent has evaporated, the evaporated solvent is passed from the evaporator (1) directly to the condensation and separating apparatus (8).

9. Method according to one of Claims 5 to 8, characterized in that, when a second intermediate pressure reduction, which is provided during the heating and follows the first, occurs, the solvent is passed from the solid insulation, via the condensation and separating apparatus (8), into the evaporator (1).

10. Method according to one of Claims 1 to 9, characterized in that the amount of the solvent/water/vapour mixture carried away from the solid insulation is controlled as a function of the mass of the solid insulation and the vapour pressure in a first autoclave (3) which accommodates the solid insulation.

11. Apparatus for carrying out the method according to one of Claims 1 to 10, in which the evaporator (1) has a container (27) which can be evacuated and contains the heating elements (26) and the solvent distribution system (14), characterized in that the heating elements (26) are formed by tubes which are aligned predominantly in the horizontal direction and are arranged at a distance from one another in the horizontal and vertical directions in the container (27), and in that the solvent distribution system (14) is fitted above the heating elements (26) and has channels (31) which are used for distribution of the supplied solvent, are aligned predominantly horizontally and are provided with outlet openings (30) for the liquid solvent, which outlet openings (30) are arranged in such a manner that the emerging liquid solvent is supplied predominantly to the heating elements (26) which are adjacent to the solvent distribution system (14).

12. Apparatus for carrying out the method according to one of Claims 1 to 10, in which the evaporator (1) has a container (27) which can be evacuated and accommodates the heating elements (26) and the solvent distribution system (14), characterized in that the heating elements (26) are formed by flat elements which are aligned predominantly in the vertical direction and are arranged at a distance from one another in the horizontal direction in the container (27), and in that the solvent distribution system (14) is fitted above the heating elements (26) and has channels (31) which are used for distribution of the supplied solvent, are aligned predominantly horizontally and are provided with outlet openings (30) for the liquid solvent, which outlet openings (30) are arranged in such a manner that the emerging liquid solvent is supplied predominantly to the heating elements (26) which are adjacent to the solvent distribution system (14).

13. Apparatus according to one of Claims 11 or 12, characterized in that vertically aligned guide plates (32) are arranged between the heating elements (26).

14. Apparatus according to Claim 13, characterized in that at least one of the guide plates (32) is fitted with at least one chicane (33) which is inclined downwards and is arranged above a heating element (26) located underneath.

15. Apparatus according to Claim 14, characterized in that the at least one chicane (33) has at least one predominantly vertically routed channel (34) in the region of the guide plate (32), or in that at least one through-opening (41) is provided in the guide plate (32) and is arranged underneath the at least one chicane (33).

16. Apparatus for carrying out the method according to one of Claims 1 to 10 having a first autoclave (3) which can be connected to the evaporator (1) via a first vapour recuperator valve (2) and accommodates the solid insulation, having a condensation and separating apparatus (8) which can be connected via a first vapour return valve (5) to the first autoclave (3), having at least one solvent pump (11, 22) which is connected downstream of the condensation and separating apparatus (8), and having a first vacuum system (17) which acts on the evaporator (1), the first autoclave (3) and the condensation and separating apparatus (8), characterized in that a first condenser (7) of the condensation and separating apparatus (8) is connected between the first vapour return valve (5) and a vacuum pump (16) of the first vacuum system (17), having an output which emits liquefied solvent and can be connected to a separating container (18) of the condensation and separating apparatus (8), which separating container (18) separates the water from the solvent.

17. Apparatus according to Claim 16, characterized in that the first vapour return valve (5) can be controlled as a function of the pressure in the first autoclave (3) and the mass of the solid insulation.

18. Apparatus according to one of Claims 16 or 17, characterized in that the evaporator (1) can be connected via a second vapour recuperator valve (2') to a second autoclave (3') which accommodates solid insulation of a second electrical device (4'), in that the second autoclave (3') can be connected via a second vapour return valve (5') to a second condenser (7') of the condensation and separating apparatus (8), which second condenser (7') is connected upstream of a vacuum pump (16') of a second vacuum system (17'), the second condenser (7') having an output which emits liquefied solvent and can be connected to the separating container (18) of the condensation and separating apparatus (8).

## Revendications

1. Procédé de séchage des isolants solides d'un premier appareil électrique (4) selon le procédé en phase vapeur, dans lequel les isolants solides contenant au moins de l'eau, éventuellement également de l'huile et des impuretés, sont chauffés sous dépression par acheminement de vapeur de solvant provenant d'un évaporateur (1) contenant des éléments de chauffage (26) et dans lequel il se forme un mélange de vapeur contenant au moins du solvant et de l'eau, et dans lequel la vapeur formée est condensée ensuite dans un dispositif (8) et l'eau au moins est séparée du solvant, caractérisé en ce qu'au début de l'opération de chauffage, l'évaporateur (1) présentant des éléments de chauffage (26) chargés partiellement de solvant ou noyés complètement ou au moins partiellement dans le solvant opère principalement en évaporateur à bulles, en ce que, au plus tard après l'évaporation d'une partie de la quantité de solvant présente au départ dans l'évaporateur, le solvant liquide obtenu dans le dispositif de condensation et de séparation (8) est acheminé à un système de distribution de solvant (14) de l'évaporateur (1), et en ce que le solvant liquide acheminé est délivré par le système de distribution (14) et est acheminé, à des fins d'évaporation à couche mince, à des éléments de chauffage (26) qui se dégagent au moins partiellement au début de l'opération de chauffage ou sont dégagés au moins partiellement au cours du chauffage.

2. Procédé selon la revendication 1, caractérisé en ce que le système de distribution (14) délivre au moins suffisamment de solvant liquide pour que les parties exposées des éléments de chauffage (26) soient recouvertes en permanence d'une couche de solvant.

3. Procédé selon la revendication 2, caractérisé en ce que la vapeur de solvant formée à partir de la couche de solvant est acheminée dans l'évaporateur (1) à contre-courant du solvant liquide.

4. Procédé selon l'une quelconque des revendications 1 à 3, caractérisé en ce que, après évaporation du solvant recouvrant les éléments de chauffage (26), l'évaporateur (1) est exclusivement exploité en évaporateur à couche mince.

5. Procédé selon l'une quelconque des revendications 1 à 4, dans lequel, outre de l'eau, il se dégage au moins de l'huile isolante (40) des isolants solides, qui est acheminée avec le solvant dans l'évaporateur (1), caractérisé en ce que, lors d'une première réduction de pression intermédiaire prévue au cours du chauffage, le solvant est évaporé de l'évaporateur avec concentration de l'huile isolante (40) et est acheminé, via le dispositif de condensation et de séparation (8), dans un réservoir de stockage de solvant (25), en ce que l'huile isolante obtenue par évaporation du solvant est éliminée de l'évaporateur, et en ce que l'évaporateur est à nouveau chargé de solvant évaporé.

6. Procédé selon la revendication 5, caractérisé en ce qu'au cours de l'évaporation du solvant, un mélange de solvant et d'huile isolante est éliminé de l'évaporateur (26) et est renvoyé dans l'évaporateur (1) via le système de distribution de solvant.

7. Procédé selon l'une quelconque des revendications 5 ou 6, caractérisé en ce que le solvant évaporé est acheminé aux isolants solides avec délivrance de chaleur de condensation.

8. Procédé selon la revendication 7, caractérisé en ce qu'après évaporation de la plus grande partie du solvant, le solvant évaporé est envoyé directement de l'évaporateur (1) au dispositif de condensation et de séparation (8).

9. Procédé selon l'une quelconque des revendications 5 à 8, caractérisé en ce que lors d'une première réduction de pression intermédiaire au cours du chauffage et d'une seconde réduction de pression intermédiaire qui suit la première, le solvant est acheminé des isolants solides dans l'évaporateur (1) via le dispositif de condensation et de séparation (8).

10. Procédé selon l'une quelconque des revendications 1 à 9, caractérisé en ce que la quantité du mélange de vapeur de solvant et d'eau rejeté par les isolants solides est réglée en fonction de la pression de vapeur régnant dans un premier autoclave (3) recevant les isolants solides et de la masse des isolants solides.

11. Dispositif pour l'exécution du procédé selon l'une quelconque des revendications 1 à 10, dans lequel l'évaporateur (1) présente une cuve (27) recevant les éléments de chauffage (26) et le système de distribution de solvant (14) et qui peut être mise sous vide, caractérisé en ce que les éléments de chauffage (26) sont formés de tubes orientés principalement dans la direction horizontale et sont agencés dans la cuve (27), espacés mutuellement dans la direction horizontale et dans la direction verticale, et en ce que le système de distribution de solvant (14) est agencé au-dessus des éléments de chauffage (26) et présente des canaux (31) servant à la distribution du solvant acheminé, orientés de manière prépondérante horizontalement et pourvus d'ouvertures de sortie (30) pour le solvant liquide, lesdites ouvertures de sortie (30) étant agencées de telle sorte que le solvant liquide sortant soit acheminé principalement aux éléments de chauffage (26) voisins du système de distribution de solvant (14).

12. Dispositif pour l'exécution du procédé selon l'une quelconque des revendications 1 à 10, dans lequel l'évaporateur (1) présente une cuve (27) recevant des éléments de chauffage (26) et le système de distribution de solvant (14) et qui peut être mise sous vide, caractérisé en ce que les éléments de chauffage (26) sont formés de registres plats orientés principalement dans la direction verticale et sont agencés dans la cuve (27), espacés mutuellement dans la direction horizontale, et en ce que le système de distribution de solvant (14) est agencé au-dessus des éléments de chauffage (26) et présente des canaux (31) servant à la distribution du solvant acheminé, orientés principalement horizontalement et pourvus d'ouvertures de sortie (30) pour le solvant liquide, lesdites ouvertures de sortie (30) étant agencées de telle sorte que le solvant liquide sortant soit acheminé principalement aux éléments de chauffage (26) voisins du système de distribution de solvant (14).

13. Dispositif selon l'une quelconque des revendications 11 ou 12, caractérisé en ce que des déflecteurs (32) orientés verticalement sont agencés entre les éléments de chauffage (26).

14. Dispositif selon la revendication 13, caractérisé en ce qu'au moins sur un des déflecteurs (32) est agencé au moins une chicane (33) inclinée vers le bas et disposée au-dessus d'un élément de chauffage (26) sousjacent.

15. Dispositif selon la revendication 14, caractérisé en ce qu'une chicane au moins (33) présente, dans la zone du déflecteur (32), au moins un canal (34) orienté principalement verticalement ou en ce qu'il est prévu dans le déflecteur (32) au moins une ouverture de passage (41) agencée en dessous de la au moins une chicane (33).

16. Dispositif pour l'exécution du procédé selon l'une quelconque des revendications 1 à 10, comprenant un premier autoclave (3) qui peut être raccordé à l'évaporateur (1) via une première soupape d'alimentation en vapeur (2) et qui reçoit les isolants solides, un dispositif de condensation et de séparation (8) qui peut être raccordé au premier autoclave (3) via une première soupape de retour de vapeur (5), au moins une pompe à solvant (11, 12) montée en aval du dispositif de condensation et de séparation (8) et un premier système à vide (17) agissant sur l'évaporateur (1), le premier autoclave (3) et le dispositif de condensation et de séparation (8), caractérisé en ce qu'entre la première soupape de retour de vapeur (5) et une pompe à vide (16) du premier système à vide (17), est monté un premier condenseur (7) du dispositif de condensation et de séparation (8) avec une sortie évacuant du solvant liquéfié, qui peut être raccordée à une cuve de séparation (18) du dispositif de condensation et de séparation (8) effectuant la séparation de l'eau et du solvant.

17. Dispositif selon la revendication 16, caractérisé en ce que la première soupape de retour de vapeur (5) peut être réglée en fonction de la pression régnant dans le premier autoclave (3) et de la masse des isolants solides.

18. Dispositif selon l'une quelconque des revendications 16 ou 17, caractérisé en ce que l'évaporateur (1) peut être raccordé, via une seconde soupape d'alimentation en vapeur (2'), à un second autoclave (3') recevant les isolants solides d'un second appareil électrique (4'), en ce que le second autoclave (3') peut être raccordé, via une seconde soupape de retour de vapeur (5'), à un second condenseur (7') du dispositif de condensation et de séparation (8) monté en amont d'une pompe à vide (16') d'un second système à vide (17'), le second condenseur (7') présentant une sortie évacuant du solvant liquéfié, qui peut être raccordée à la cuve de séparation (18) du dispositif de condensation et de séparation (8).
